# EUROPÄISCHE PATENTSCHRIFT

(11) **EP 1 981 649 B1**
(45) Veröffentlichungstag und Bekanntmachung des Hinweises auf die Patenterteilung: **15.10.2014**
(21) Anmeldenummer: 07728159.0
(22) Anmeldetag: 16.04.2007
(51) Int. Cl.: B05B 15/06, F16B 21/02, F16B 21/16, B05B 7/08

(54) **SCHNELLWECHSELADAPTER UND SPRITZAPPARAT ZUR MONTAGE AUF EINEM SCHNELLWECHSELADAPTER**
RAPID-EXCHANGE ADAPTER AND SPRAYING DEVICE FOR ASSEMBLING ON A RAPID-EXCHANGE ADAPTER
ADAPTATEUR POUR CHANGEMENT RAPIDE ET APPAREIL DE PULVERISATION A MONTER SUR UN ADAPTATEUR POUR CHANGEMENT RAPIDE

(30) Priorität: 21.04.2006 DE 102006019363
(43) Veröffentlichungstag der Anmeldung: 22.10.2008
(73) Patentinhaber: Krautzberger GmbH, 65343 Eltville am Rhein (DE)
(72) Erfinder: WEIDMANN, Thomas, 56355 Bettendorf (DE)
(74) Vertreter: Mehler Achler
(86) Internationale Anmeldenummer: PCT/EP2007/053694
(87) Internationale Veröffentlichungsnummer: WO 2007/122132

(56) Entgegenhaltungen:
- WO-A-00/63564
- WO-A-2006/006055
- DE-A1- 19 605 227
- DE-A1-102004 047 924
- DE-U1- 20 303 876
- US-A- 5 265 800
- US-A- 6 123 302

## Beschreibung

Die Erfindung betrifft einen Schnellwechseladapter für Spritzapparate mit einem Grundkörper, der eine Montagefläche zum Anbringen eines Spritzapparates und mindestens ein drehbares Spannelement aufweist. Die Erfindung bezieht sich auch auf einen Spritzapparat zur Montage auf einem solchen Schnellwechseladapter.

Spritzapparate werden zum Auftragen von Beschichtungen auf Werkstücke, insbesondere in der Serien- und Massenfertigung eingesetzt, wobei die Spritzapparate auf automatisierte Arbeitsabläufe programmiert werden können. Dabei können im Rahmen eines Arbeitsablaufs, das heißt bei der Bearbeitung eines Werkstücks, sowohl räumliche Einstellungen als auch Abänderungen in der Art und Weise der Materialabgabe (Mengenänderung, Änderung des Spritzkegels) vorgegeben werden.

Die Anforderungen an solche Spritzapparate sind eine präzise und flexible Regelbarkeit, ein geringer Platzbedarf und hohe Konstanz in der Qualität des Arbeitsergebnisses.

Bekannte automatische Materialspritzvorrichtungen besitzen ein bewegliches Bauteil, in der Regel in Gestalt eines Roboterarms. Die Arbeitsseite des Roboterarms, das heißt die dem zu bearbeitenden Werkstück zugewandte Seite, ist für die Aufnahme verschiedener Spritzapparate mit einem Adapter versehen. Üblich sind beispielsweise Adapter mit Versorgungsleitungen oder mit im Adapter integrierten Versorgungskanälen, die den Spritzapparat mit den benötigten Fluiden versorgen.

Adapter dienen nicht nur zur Kopplung von Spritzapparaten an solchen beweglichen Einrichtungen wie Roboterarme, sondern auch zur Kopplung von Spritzapparaten an stationäre Einrichtungen wie Spritzkabinen, sowie an Förder- und Durchlaufsysteme oder zur Befestigung an Pistolenhalterungen in einer Lackieranlage.

Ein für diese Zwecke einsetzbarer Adapter ist beispielsweise aus der DE 42 42 715 C2 bekannt.

Aus der DE 196 46 277 A1 ist eine Sprühbeschichtungseinrichtung bekannt, die eine schnelle Montage einer Sprühvorrichtung an einer Trägerplatte ermöglichen soll. Diese Trägerplatte ist mit einem Adapter verbunden, der für verschiedene Einsatzzwecke geeignet ist. Die Verbindung der Sprühvorrichtung mit der Trägerplatte erfolgt mit einem Dreh-Spann-Verschluss, welcher es erlaubt, durch eine relative Drehbewegung der beiden Komponenten diese miteinander zu verbinden. Durch ein Verriegelungsmittel soll ein unbeabsichtigtes Öffnen der Dreh-Spann-Verbindung verhindert werden.

Diese Vorrichtung hat jedoch den Nachteil, das beim An- und Abbau der Spritzapparatur diese insgesamt gedreht werden muss, wobei zusätzlich noch ein Widerstand überwunden werden muss, damit die Spritzapparatur im Verriegelungsmittel einrastet.

Ein weiterer Nachteil dieser bekannten Vorrichtung besteht darin, dass der Spritzapparat nicht sicher auf der Trägerplatte gehalten wird.

Aus der EP 1 287 901 A2 ist eine Spritzbeschichtungseinrichtung mit einer Spritzvorrichtung bekannt, die an einem Trägerelement durch ein Spannmittel befestigbar ist, welches an einem dieser beiden Teile relativ zu beiden Teilen drehbar befestigt ist. Das Spannmittel enthält ein Spannelement, welches um eine sich in Spannrichtung erstreckende Drehachse relativ zur Spritzvorrichtung und relativ zum Trägerelement drehbar ist. Das Spannelement ist mittels einer Schraube an der Spritzvorrichtung auf der Seite drehbar befestigt, welche dem Trägerelement zugewandt ist. Das Spannelement hat in Drehachsenlängsrichtung mit Abstand von der Spritzvorrichtung entfernt eine quer zur Drehachse und um die Drehachse sich erstreckende erste Spannfläche, welche zur Spritzvorrichtung zeigt. An dem Trägerelement ist eine von der Spritzvorrichtung wegzeigende zweite Spannfläche vorgesehen.

Im Trägerelement ist neben der zweiten Spannfläche ein Durchgang gebildet, durch welchen das Spannelement in Längsrichtung der Drehachse hindurch bewegbar ist, um die Spritzvorrichtung auf dem Trägerelement aufsetzen zu können. Hierbei liegen beide Spannflächen nebeneinander in einer Trenn-DrehStellung. Durch Drehen des Spannelementes in seine Spanneingriffs-Drehstellung ist die erste Spannfläche auf die zweite Spannfläche des Trägerelementes drehbar. Dabei wird die Spritzvorrichtung gegen das Spannelement gezogen, wobei die Dichtungsringe zwischen dem Trägerelement und der Spritzvorrichtung eingespannt werden. Es wird auch darauf hingewiesen, dass das Spannelement nicht an der Spritzvorrichtung sondern am Trägerelement drehbar befestigt sein kann. Diese Ausführungsform wird allerdings nicht näher erläutert.

Diese aus der EP 1 287 901 A2 bekannte Vorrichtung hat den Nachteil, dass sich die Drehachse des Spannelementes in Spannrichtung erstreckt, sodass das Spannelement an der Auflagefläche des Spritzapparates angeordnet werden muss. Es ist deshalb erforderlich, dass die Trägerplatte von der Unterseite her, das heißt von der der Montagefläche abgewandten Seite zugänglich sein muss, damit das Spannelement betätigt werden kann. Diese Spannvorrichtung ist unhandlich und beispielsweise an Adaptern, die auf Roboterarmen befestigt werden müssen, nicht einsetzbar, weil die Unterseite in der Regel zur Befestigung auf dem Roboterarm genutzt wird. Zur sicheren Fixierung ist außerdem noch eine Nieder-Halte-Steckvorrichtung vorgesehen, die die Handhabung bei einem Wechsel des Spritzapparates zusätzlich erschwert.

Die DE 203 03 876 U1 offenbart eine Vorrichtung zum zerstäubten Auftragen fließfähiger Stoffe auf einen Gegenstand, deren einfaches und sauberes Demontieren und Montieren von Dosierventilen zulässt. Hierzu ist eine Wechseleinrichtung vorgesehen, die eine lösbare Verbindung des Dosierventils mit den Anschlüssen ermöglicht. Das jeweilige Dosierventil braucht zur Demontage lediglich von der Wechseleinrichtung abgezogen zu werden, wobei gleichzeitig alle Anschlüsse vom Dosierventil gelöst werden. Der Wechseleinrichtung ist ein Betätigungsmittel in Gestalt eines Exzenterstiftes zur formschlüssigen Arretierung der Verbindung des Dosierventils mit der Wechseleinrichtung zugeordnet. Zur Arretierung wirkt der Exzenterhebel mit einer Ringnut des Anschlusses zusammen.

Die Aufgabe der Erfindung besteht darin, einen Schnellwechseladapter zu schaffen, der schnell und auf einfache Weise mit den Spritzapparat verbunden werden kann, wobei die Unterseite des Schnellwechseladapters vollständig zur Befestigung an einem weiteren Bauteil, wie zum Beispiel an einem Roboterarm, nutzbar sein soll.

Diese Aufgabe wird mit einem Schnellwechseladapter mit den Merkmalen des Anspruchs 1 gelöst.

Der Spritzapparat wird lediglich auf den Adapter aufgesetzt, sodass das mindestens eine Haltemittel in die im Adapter vorgesehene erste Bohrung eingreift. Dadurch, dass sich das Spannmittel ebenfalls in die erste Bohrung erstreckt, kann es an dem Halteelement angreifen, das Halteelement beiziehen und auf diese Weise den Spritzapparat gegen den Adapter verspannen.

Durch die Anordnung der Drehachse des Spannelementes parallel zur Montagefläche und somit auch senkrecht zur Spannrichtung, ragt das Spannelement an einer Seitenfläche aus dem Grundkörper heraus und ist auf diese Weise leicht zugänglich. Das Spannelement kann bezüglich des auf dem Adapter aufgesetzten Spritzapparats beispielsweise an einer vorder- oder rückwärtigen Seitenfläche angeordnet sein. Die rückseitige Anordnung hat den Vorteil, dass dort im Betrieb eine geringere Verschmutzung durch Spritznebel auftritt, die die Funktion des Spannelements beeinträchtigen könnte.

Ein weiterer Vorteil besteht darin, dass der Spannmechanismus im Inneren des Grundkörpers und somit vor Verunreinigungen geschützt angeordnet ist.

Die Rüst-, Wartungs- und Reparaturzeiten einer Spritzanlage können mit dem erfindungsgemäßen Schnellwechseladapter deutlich verkürzt werden.

Das Spannelement ist ein Exzenterhebel. Der Exzenterhebel ermöglicht ein kontinuierliches Verspannen, wobei die Spannkraft frei gewählt und somit einstellbar ist.

Der Exzenterhebel ist in einer zweiten Bohrung drehbar gelagert, die senkrecht und versetzt zur ersten Bohrung im Grundkörper angeordnet ist. Diese zweite Bohrung kreuzt die erste Bohrung, wobei die beiden Bohrungen etwas versetzt zueinander angeordnet sind und sich nur teilweise schneiden.

Der Exzenterhebel ist in Richtung der Drehachse mittels einer Feder, insbesondere einer Druckfeder, vorgespannt. Zur Freigabe der ersten Bohrung wird die

Ausnehmung des Exzenterhebel in die erste Bohrung gedreht (Freigabestellung) und der Exzenterhebel gegen die Kraft der Feder eingeschoben. Anschließend wird das Halteelement eingeführt und der federbelastete Exzenterhebel mit seinen Drehbolzen in die Ausgangsstellung zurückbewegt, wodurch der Exzenterhebel in die Aussparung des Halteelementes eingreift und dieses sichert.

Der Exzenterhebel weist vorzugsweise einen Drehbolzen und eine exzentrischen Abschnitt auf. Der exzentrische Abschnitt wird vorzugsweise durch einen zylindrischen oder teilzylindrischen Abschnitt gebildet. Hierbei ist vorzugsweise der Mittelpunkt M_{E} des Krümmungsradius R_{E} des exzentrischen Abschnitts versetzt zum Mittelpunkt R_{D} des Krümmungsradius R_{D} des Drehbolzens angeordnet.

Der exzentrische Abschnitt weist vorzugsweise eine zylindrische Außenfläche mit dem Krümmungsradius R_{E} auf, der kleiner ist als der Krümmungsradius R_{D} der zylindrischen Außenfläche des Drehbolzens.

Vorzugsweise weist der Exzenterhebel im Bereich des exzentrischen Abschnitts eine Ausnehmung auf. Das Halteelement in der ersten Bohrung kann aufgrund dieser Ausnehmung beim Einstecken an dem Exzenterhebel vorbeigeführt werden. Durch Drehen des Exzenterhebels greift der exzentrische Abschnitt am Halteelement an, das vorzugsweise ebenfalls eine Aussparung aufweist, in die der exzentrische Abschnitt eingreifen kann.

Vorzugsweise ist der Mittelpunkt M_{E} gegenüber dem Mittelpunkt M_{D} derart versetzt angeordnet, dass der erste Endabschnitt der zylindrischen Außenfläche des exzentrischen Abschnitts gegenüber der zylindrischen Außenfläche des Drehbolzens um einen größeren Betrag nach innen versetzt angeordnet ist als der zweite Endabschnitt der zylindrischen Außenfläche des exzentrischen Abschnitts.

Vorzugsweise greift zuerst der erste Endabschnitt in die Aussparung des Halteelements ein. Mit zunehmendem Eindrehen des exzentrischen Abschnitts in die Aussparung des Halteelements wird die Kraft auf das Halteelement erhöht, das in seiner Achsrichtung eingezogen wird.

Das Halteelement kann nur dann in die erste Bohrung eingeführt werden, wenn die Ausnehmung des exzentrischen Abschnittes sich im Bereich der ersten Bohrung befindet. Der Exzenterhebel ist gemäß einer besonderen Ausführungsform daher in Längsrichtung verschiebbar angeordnet und kann in die entsprechende Position geschoben werden.

Wenn der Exzenterhebel in seiner Ausgangsposition und in Freigabestellung teilweise mit seinem Drehbolzen in die erste Bohrung hineinragt, kann das Halteelement beim Einsetzen den Exzenterhebel gegen die Kraft der Feder verschieben. Zu diesem Zweck ist es vorteilhaft, wenn die Spitze des Halteelements gerundet oder konisch ausgeführt ist. Wenn die Aussparung des Halteelements den Exzenterhebel erreicht, springt der Exzenterhebel in seine Ausgangsstellung zurück, wodurch das Halteelement gesichert ist. Das Halteelement rastet in den Exzenterhebel ein.

Zum Verspannen wird der Exzenterhebel gegebenenfalls gegen die Kraft der Feder nochmals eingeschoben und gedreht, bis die gewünschte Verspannung erreicht ist.

Um ein Lösen der Verspannung zu verhindern ist vorzugsweise eine Losdrehsicherung vorgesehen, die am Spannelement angreift. Der Drehbolzen besitzt zu diesem Zweck im Bereich der Losdrehsicherung eine mit Rillen versehene Oberfläche.

Die Losdrehsicherung umfasst vorteilhafterweise ein federndes Druckstück, das senkrecht zur Drehachse des Drehbolzens angeordnet ist und mit seiner Spitze auf die Rillen drückt. Durch eine Vielzahl kleiner Rillen ist es möglich, den Exzenterhebel in jeder möglichen Endstellung zu arretieren. Zum Lösen der Verspannung muss der Drehbolzen gegen die Kraft des federnden Druckstückes zurückgedreht werden.

Vorzugsweise besitzt der Drehbolzen im Bereich der Losdrehsicherung einen Anschlag.

Wenn die Freigabestellung des Exzenterhebels erreicht ist, springt das Druckstück vorzugsweise in eine den Anschlag aufweisende Ausnehmung des Drehbolzens, so dass ein Weiterdrehen des Exzenterhebels verhindert wird.

Ein Spritzapparat, der auf einem solchen Schnellwechseladapter befestigt werden kann, weist an der Auflagefläche mindestens ein gegenüber der Auflagefläche vorstehendes Halteelement auf, das in seiner Außenfläche eine Aussparung aufweist, in die im montierten Zustand das Spannelement des Schnellwechseladapters eingreifbar ist.

Beispielhafte Ausführungsformen der Erfindung werden nachfolgend anhand der Zeichnungen näher erläutert. Es zeigen:
- Figur 1: einen Spritzapparat und einen Schnellwechseladapter vor dem Zusammenbau,
- Figur 2: einen Schnellwechseladapter mit aufgesetztem Spritzapparat, wobei der Adapter im Vertikalschnitt dargestellt ist,
- Figur 3: einen Schnitt längs der Linie III-III gemäß Figur 2 mit dem Spannelement in Freigabestellung,
- Figur 4: den Schnitt gemäß der Figur 3 mit dem Spannelement in Spannstellung,
- Figur 5: eine Seitenansicht des Exzenterhebels,
- Figur 6: einen Schnitt längs der Linie A-A in Figur 5 und
- Figur 7: einen Schnitt längs der Linie B-B in Figur 5.

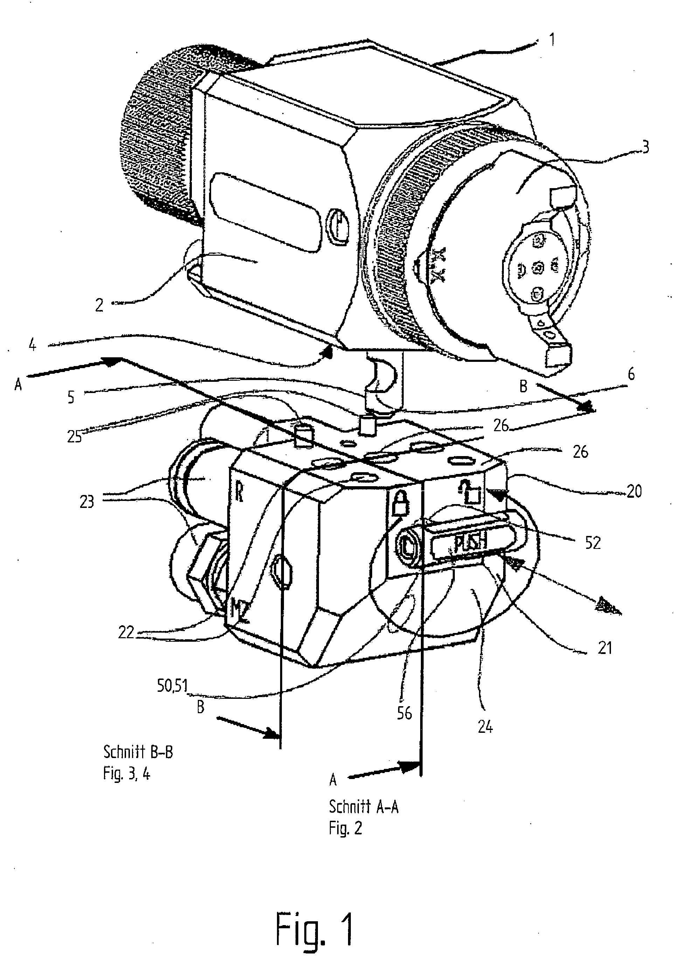

In der Figur 1 ist ein Spritzapparat 1 perspektivisch dargestellt, der ein Gehäuse 2 und einen Spritzkopf 3 aufweist. Das Gehäuse 2 besitzt an der Unterseite eine Auflagefläche 4, an der ein Halteelement 5 in Form eines Stiftes nach unten vorsteht. Dieses Halteelement 5 besitzt eine halbkreisförmige Aussparung 6.

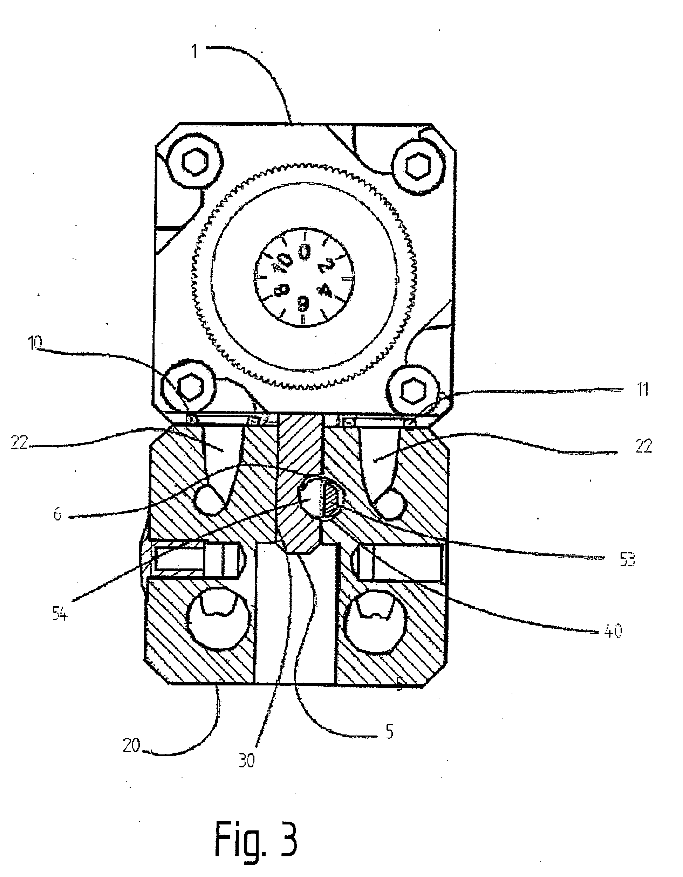

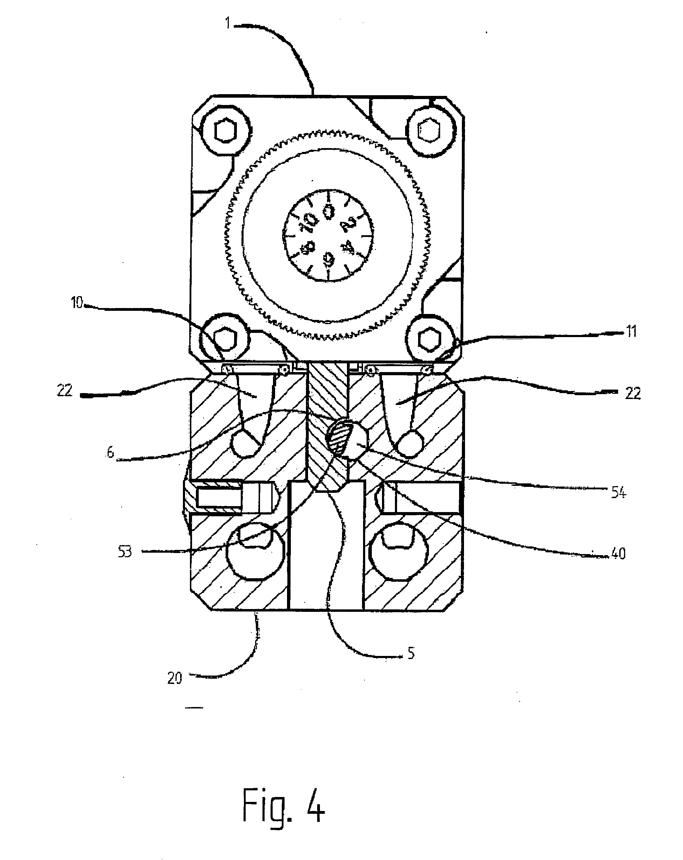

Unter dem Spritzapparat 1 ist ein Schnellwechseladapter 20 dargestellt, der einen Grundkörper 21 aufweist, an dem Fluidanschlüsse 23 vorgesehen sind, die mit Fluidkanälen 22 (siehe auch Fig. 3 und 4) im Inneren des Grundkörpers 21 in Verbindung stehen. Diese Fluidkanäle 22 münden an der Montagefläche 26 des Grundkörpers 21. Bei aufgesetztem Spritzapparat 1 kommunizieren diese Fluidkanäle 22 mit entsprechenden Fluidkanälen innerhalb des Gehäuses 2 des Spritzapparates 1.

Der Schnellwechseladapter 20 besitzt in der Montagefläche 26 eine sich senkrecht nach unten erstreckende erste Bohrung 30. An der vorderen Seitenfläche 24 des Schnellwechseladapters 20 ist ein Spannelement 50 in Form eines Exzenterhebels 51 zu sehen, der einen Drehbolzen 52, einen Exzenterabschnitt 53 und ein Griffelement 56 aufweist. Der Drehbolzen 52 erstreckt sich in das Innere des Grundkörpers 21 in Richtung der ersten Bohrung 30. Der Drehbolzen 52 ist dementsprechend in einer zweiten Bohrung 40 drehbar gelagert.

Der Exzenterhebel 51 ist in axialer Richtung des Drehbolzens 52 verschiebbar, was durch den Doppelfeil gekennzeichnet ist. Wie das Spannelement 50 mit dem Halteelement 5 im zusammengesetzten Zustand zusammenwirkt, wird im Zusammenhang mit den nachfolgenden Figuren erläutert.

Auf der Montagefläche 26 sind zusätzlich zwei Positionierstifte 25 zu sehen, die in korrespondierende Bohrungen in der Auflagefläche 4 des Spritzapparates 1 eingreifen und somit ein Verdrehen von Schnellwechseladapter und Spritzapparat verhindern.

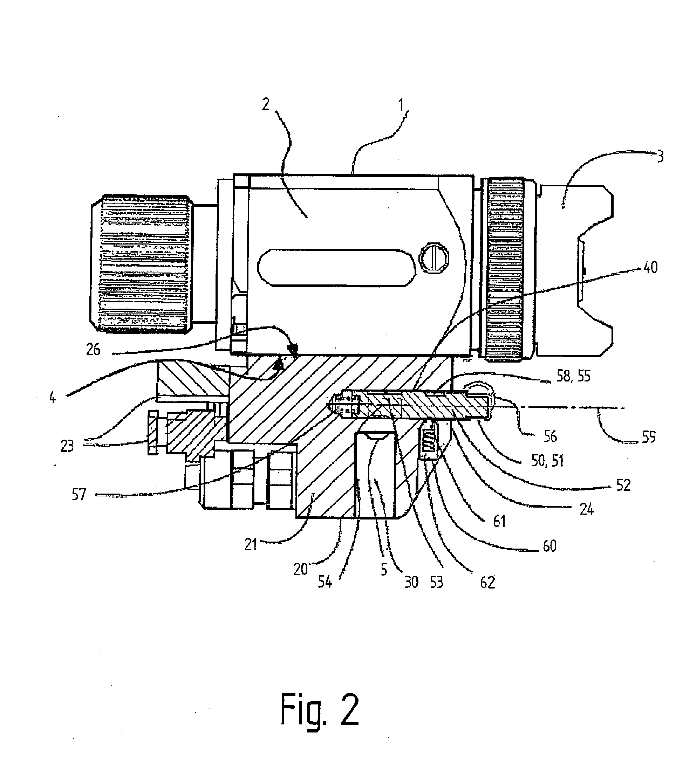

In der Figur 2 ist ein Vertikalschnitt durch den Schnellwechseladapter 20 dargestellt, auf dem der Spritzapparat 1 montiert ist. Die Auflagefläche 4 liegt auf den Montagefläche 26 des Schnellwechseladapters 20 auf. Das Halteelement 5 in Form des Stiftes ist in die Bohrung 30 eingesetzt, wobei lediglich das untere freie Ende sichtbar ist, das gerundet oder konisch ausgebildet sein kann. Von der vorderen Seitenfläche 24 erstreckt sich die zweite Bohrung 40 in das Innere des Grundkörpers 21 und kreuzt die erste Bohrung 30. Wie in den Figuren 3 und 4 zu sehen ist, ist die zweite Bohrung 40 seitlich zur ersten Bohrung 30 versetzt.

In der zweiten Bohrung 40 ist der Exzenterhebel 51 gelagert, der den Exzenterabschnitt 53 aufweist, der durch einen teilzylindrischen Abschnitt gebildet wird und eine Ausnehmung 54 aufweist, die sich im Bereich der ersten Bohrung 30 befindet. Die Drehachse 59 des Exzenterhebels 51 ist parallel zur Montagefläche 26 ausgerichtet. An der Spitze des Drehbolzens 52 ist eine Feder 57 angeordnet, die den Exzenterhebel 51 in einer nach außen verschobenen Ruhe- oder Ausgangsposition hält. Durch Einschieben des Exzenterhebels 51 gegen die Kraft der Feder 57 gelangt der Exzenterabschnitt 53 mit seiner Ausnehmung 54 vollständig in den Bereich der ersten Bohrung 30. In dieser Position und bei entsprechender Drehstellung des Exzenterhebels (Freigabestellung) wird die erste Bohrung 30 zum Einsetzen des Halteelementes 5 vollständig freigegeben, wie dies in der Schnittdarstellung in der Figur 3 zu sehen ist.

Durch Drehen des Exzenterhebels 51 greift der Exzenterabschnitt 53 in die Aussparung 6 des Halteelementes 5, wie dies in der Figur 4 dargestellt ist und zieht hierbei den Spritzapparat 1 nach unten, so dass er gegen den Schnellwechseladapter 20 verspannt wird.

In den Figuren 3 und 4 sind im Bereich der Fluidkanäle 22 des Schnellwechseladapters 20 auf der Montagefläche 26 Dichtungen 10 und 11 eingezeichnet. Durch das Verspannen von Spritzapparat 1 und Schnellwechseladapter 20 werden die Dichtungen 10, 11 mit einer vorgegebenen Kraft zusammengedrückt, so dass ein dichter Abschluss zwischen den Fluidkanälen 22 des Schnellwechseladapters 20 und den (nicht dargestellten) Fluidkanälen des Spritzapparates 1 gewährleistet wird.

In der Figur 2 ist zusätzlich noch eine Losdrehsicherung 60 eingezeichnet, die ein Druckstück 61 mit Feder 62 aufweist, das auf die Oberfläche des Drehbolzens 52 drückt. Die Oberfläche des Drehbolzens ist in einem Abschnitt 58 mit Rillen 55 versehen, die sich in Längsrichtung erstrecken. Durch viele kleine Längsrillen 55 ist es möglich, den Exzenterhebel 51 in jeder möglichen Endstellung zu arretieren. Zum Lösen dieser Losdrehsicherung 60 wird der Exzenterhebel 51 gegen die Federkraft des Druckstückes 61 zurückgedreht, bis die Freigabestellung erreicht ist. Anschließend wird der Exzenterhebel 51 gegen die Kraft der Feder 57 eingedrückt, so dass das Halteelement 5 frei kommt und der Spritzapparat 1 abgenommen werden kann.

Der Spritzapparat 1 wird wie folgt auf dem Schnellwechseladapter 20 montiert. Das Halteelement 5 des Spritzapparates 1 wird in den Schnellwechseladapter 20 gesteckt, so dass er einrastet und gesichert ist. Über den im Schnellwechseladapter 20 befindlichen Exzenterhebel 51 wird durch eine Drehbewegung der Spannvorgang eingeleitet. Das federnde Druckstück 61 dient in Verbindung mit den Rillen 7 am Exzenterhebel 51 als Losdrehsicherung 60. Nach dem Entspannen des Exzenterhebels 51 durch Drehen in seine Freigabestellung und durch Drücken des Exzenterhebels 51 in Richtung der Drehachse 59 kann der Spritzapparat 1 wieder demontiert werden.

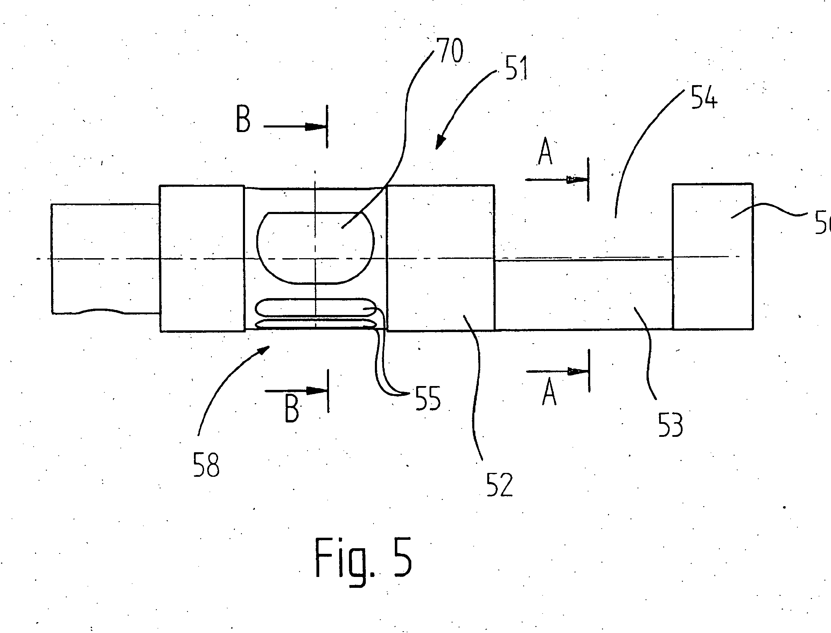

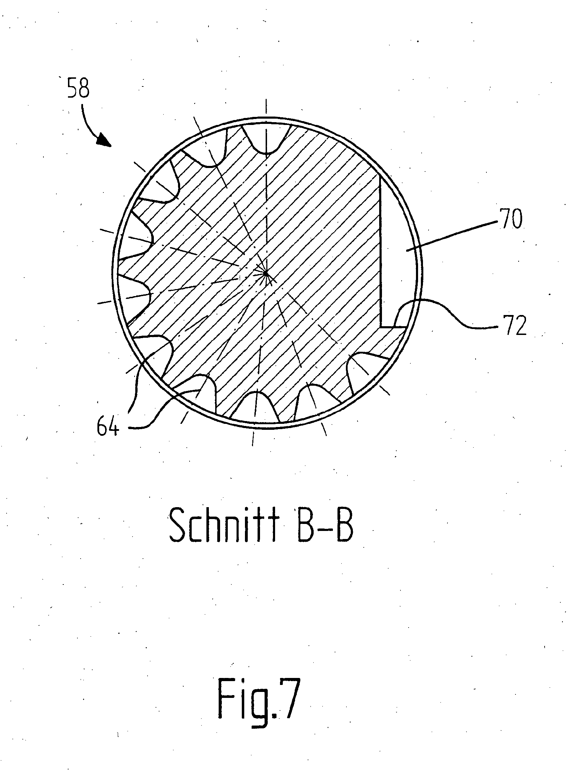

In der Figur 5 ist der Exzenterhebel 51 in Seitenansicht vergrößert dargestellt. Der Exzenterhebel 51 weist den Drehbolzen 52 auf, der in einem mittleren Bereich einen Abschnitt 58 mit Rillen 55 aufweist. Wie der Schnittdarstellung B-B gemäß Figur 7 zu entnehmen ist, erstreckt sich dieser Abschnitt 58 mit den Rillen 55 über einen Umfangsabschnitt < 270°. In dem Bereich, wo keine Rillen 55 vorgesehen sind, ist eine Ausnehmung 70 mit einem Anschlag 72 angeordnet.

Das Druckstück 61, das in den Figuren 5 bis 7 nicht eingezeichnet, greift in diese Rillen 55 ein. Beim Lösen des Exzenterhebels 51 wandert dieses Druckstück 61 aus dem Abschnitt 58 in die Ausnehmung 70 und erreicht den Anschlag 72, wenn die vollständige Freigabestellung des Exzenterhebels 51 erreicht ist.

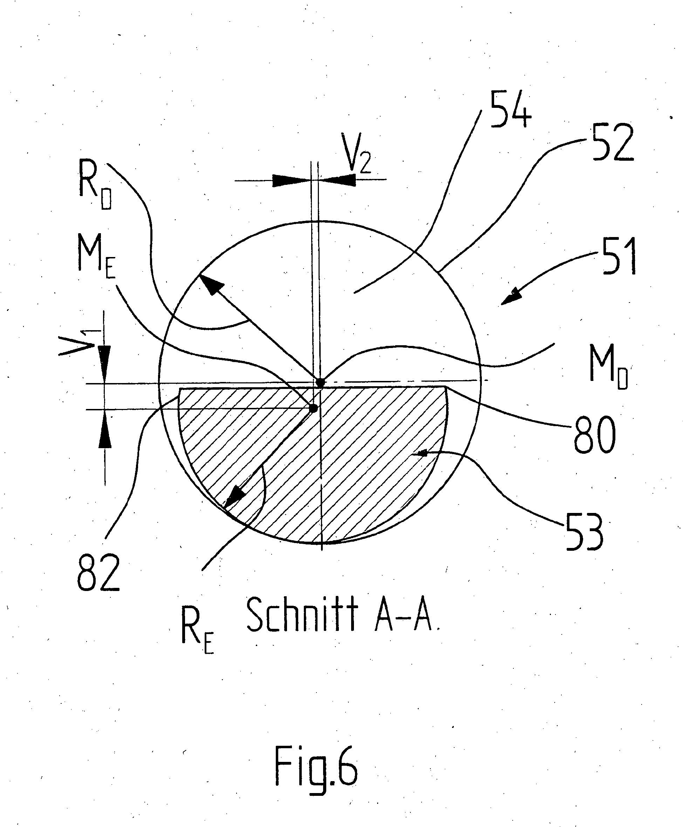

In der Figur 5 schließt sich nach rechts der exzentrische Abschnitt 53 mit der Ausnehmung 54 an. In der Schnittdarstellung A-A gemäß der Figur 6 ist der Exzenterabschnitt 5, der als Teilzylinder ausgeführt ist, vergrößert dargestellt. Der Exzenterabschnitt 53 ragt nicht über die Außenkontur des Drehbolzens 52 hinaus. Der Krümmungsradius R_{E} des Exzenterabschnittes 53 ist kleiner als der Krümmungsradius R_{D} des Drehbolzens 52.

Wie der Figur 6 zu entnehmen ist, sind die Mittelpunkte M_{E} des Exzenterabschnitts 53 und M_{D} des Drehbolzens 52 versetzt zueinander angeordnet. Die außermittige Anordnung des Mittelpunktes M_{E} führt sowohl zu einem Versatz V₁ in vertikaler Richtung als auch zu einem Versatz V₂ in horizontaler Richtung.

Da sich der Exzenterabschnitt 53 gemäß der Darstellung der Figur 6 im unteren Bereich des Drehbolzens 52 befindet und sich bis zum Mittelpunkt M_{E} erstreckt, überdeckt die Querschnittsfläche mehr als eine Halbkreisfläche. Der erste Endabschnitt 80 ist aufgrund des Versatzes V₂ gegenüber der Außenkontur des Drehbolzens 52 weiter nach innen versetzt als der zweite Endabschnitt 82 auf der gegenüberliegenden Seite des Exzenterabschnitts 53.

Der zurückgesetzte erste Endabschnitt 80 greift beim Spannen des Halteelementes zuerst in die Aussparung 6 ein. Durch die Annäherung der Außenkontur des exzentrischen Abschnitts 53 an die Außenkontur des Drehbolzens 52 wird beim weiteren Eindrehen und somit Verspannen die gewünschte Kraft auf das Halteelement 6 ausgeübt, so dass der Spritzapparat 1 in die erste Bohrung 30 eingezogen wird.

### Bezugszeichenliste

- 1: Spritzapparat
- 2: Gehäuse
- 3: Spritzkopf
- 4: Auflagefläche
- 5: Halteelement
- 6: Aussparung

- 10: Dichtung
- 11: Dichtung

- 20: Schnellwechseladapter
- 21: Grundkörper
- 22: Fluidkanal
- 23: Fluidanschluss
- 24: vordere Seitenfläche
- 25: Positionierstift
- 26: Montagefläche

- 30: erste Bohrung

- 40: zweite Bohrung

- 50: Spannelement
- 51: Exzenterhebel
- 52: Drehbolzen
- 53: Exzenterabschnitt
- 54: Ausnehmung
- 55: Rille
- 56: Griffelement
- 57: Feder
- 58: Abschnitt mit Rillen
- 59: Drehachse

- 60: Losdrehsicherung
- 61: Druckstück
- 62: Feder

- 70: Ausnehmung
- 72: Anschlag

- 80: erster Endabschnitt
- 82: zweiter Endabschnitt

## Patentansprüche

1. Schnellwechseladapter (20) für Spritzapparate (1) mit einem Grundkörper (21), der eine Montagefläche (26) zum Anbringen eines Spritzapparates (1) und mindestens ein drehbares Spannelement (50) aufweist, wobei im Grundkörper (21) senkrecht zur Montagefläche (26) mindestens eine erste Bohrung (30) zur Aufnahme mindestens eines am Spritzapparat (1) befestigten Halteelementes (5) vorgesehen ist und sich das Spannelement (50) mindestens teilweise in die erste Bohrung (30) erstreckt, wobei die Drehachse (59) des Spannelementes (50) parallel zur Montagefläche (26) angeordnet ist,
wobei das Spannelement (50) ein Exzenterhebel (51) ist, der in einer zweiten Bohrung (40) drehbar gelagert ist, die senkrecht und versetzt zur ersten Bohrung (30) im Grundkörper (21) angeordnet ist,
**dadurch gekennzeichnet,**
**dass** der Exzenterhebel (51) in Richtung der Drehachse (59) mittels einer Feder (57) vorgespannt ist.

2. Schnellwechseladapter nach 1, **dadurch gekennzeichnet, dass** der Exzenterhebel (51) einen Drehbolzen (52) und einen exzentrischen Abschnitt (53) aufweist.

3. Schnellwechseladapter nach einem der Ansprüche 1 oder 2, **dadurch gekennzeichnet, dass** der exzentrische Abschnitt (53) einen zylindrischen oder teilzylindrischen Abschnitt aufweist.

4. Schnellwechseladapter nach einem der Ansprüche 1 bis 3, **dadurch gekennzeichnet, dass** der Exzenterhebel (51) im Bereich des exzentrischen Abschnittes (53) eine Ausnehmung (54) aufweist.

5. Schnellwechseladapter nach einem der Ansprüche 1 bis 4, **dadurch gekennzeichnet, dass** der exzentrische Abschnitt (53) eine zylindrische Außenfläche mit einem Krümmungsradius R_{E} aufweist, der kleiner ist als der Krümmungsradius R_{D} der zylindrischen Außenfläche des Drehbolzens (52).

6. Schnellwechseladapter nach Anspruch 5, **dadurch gekennzeichnet, dass** der Mittelpunkt M_{E} des Krümmungsradius R_{E} des exzentrischen Abschnittes (53) versetzt zum Mittelpunkt M_{D} des Krümmungsradius R_{D} des Drehbolzens (52) angeordnet ist.

7. Schnellwechseladapter nach Anspruch 6, **dadurch gekennzeichnet, dass** der Mittelpunkt M_{E} gegenüber dem Mittelpunkt M_{D} derart versetzt angeordnet ist, dass der erste Endabschnitt (80) der zylindrischen Außenfläche des exzentrischen Abschnitts (53) gegenüber der Außenfläche des Drehbolzens (52) um einen größeren Betrag nach innen versetzt angeordnet ist als der zweite Endabschnitt (82) der zylindrischen Außenfläche des exzentrischen Abschnitts (53).

8. Schnellwechseladapter nach einem der Ansprüche 1 bis 7, **dadurch gekennzeichnet, dass** das Spannelement in Längsrichtung verschiebbar angeordnet ist.

9. Schnellwechseladapter nach einem der Ansprüche 1 bis 8, **dadurch gekennzeichnet, dass** der Exzenterhebel (51) im vorgespannten Zustand mit dem Drehbolzen (52) teilweise in die erste Bohrung (30) hineinragt.

10. Schnellwechseladapter nach einem der Ansprüche 1 bis 9, **dadurch gekennzeichnet, dass** eine Losdrehsicherung (60) vorgesehen ist, die am Spannelement (50) angreift.

11. Schnellwechseladapter nach einem der Ansprüche 2 bis 10, **dadurch gekennzeichnet, dass** der Drehbolzen (52) im Bereich der Losdrehsicherung (60) eine mit Rillen (55) versehene Oberfläche aufweist.

12. Schnellwechseladapter nach einem der Ansprüche 1 bis 11, **dadurch gekennzeichnet, dass** die Losdrehsicherung (60) ein federndes Druckstück (61) umfasst.

13. Schnellwechseladapter nach Anspruch 12, **dadurch gekennzeichnet, dass** das Druckstück (61) senkrecht zur Drehachse (59) des Drehbolzens (52) angeordnet ist.

14. Schnellwechseladapter nach einem der Ansprüche 10 bis 13, **dadurch gekennzeichnet, dass** der Drehbolzen (52) im Bereich der Losdrehsicherung (60) einen Anschlag (72) aufweist.

15. Schnellwechseladapter nach einem der Ansprüche 1 bis 14 mit einem Spritzapparat (1), der eine Auflagefläche (4) aufweist,
wobei an der Auflagefläche (4) mindestens ein gegenüber der Auflagefläche (4) vorstehendes Halteelement (5) angeordnet ist, das in seiner Außenfläche eine halbkreisförmige Aussparung (6) aufweist, in die im montierten Zustand der Exzenterhebel (51) des Schnellwechseladapters (20) eingreift.

## Claims

1. Rapid-change adapter (20) for spraying devices (1) having a base member (21) which has an assembly face (26) for fitting an spraying device (1) and at least one rotatable clamping element (50), there being provided in the base member (21) perpendicularly relative to the assembly face (26) at least a first hole (30) for receiving at least one holding element (5) which is secured to the spraying device (1), and the clamping element (50) extending at least partially into the first hole (30), the rotation axis (59) of the clamping element (50) being arranged parallel with the assembly face (26),
the clamping element (50) being an eccentric lever (51) which is rotatably supported in a second hole (40), which is arranged in the base member (21) in a perpendicular and offset manner with respect to the first hole (30),
**characterised in that**
the eccentric lever (51) is pretensioned in the direction of the rotation axis (59) by means of a spring (57).

2. Rapid-change adapter according to claim 1, **characterised in that** the eccentric lever (51) has a rotary pin (52) and an eccentric portion (53).

3. Rapid-change adapter according to either claim 1 or claim 2, **characterised in that** the eccentric portion (53) has a cylindrical or partially cylindrical portion.

4. Rapid-change adapter according to any one of claims 1 to 3, **characterised in that** the eccentric lever (51) has a recess (54) in the region of the eccentric portion (53).

5. Rapid-change adapter according to any one of claims 1 to 4, **characterised in that** the eccentric portion (53) has a cylindrical outer face having a radius of curvature R_{E}, which is smaller than the radius of curvature R_{D} of the cylindrical outer face of the rotary pin (52).

6. Rapid-change adapter according to claim 5, **characterised in that** the centre point M_{E} of the radius of curvature R_{E} of the eccentric portion (53) is arranged so as to be offset with respect to the centre point M_{D} of the radius of curvature R_{D} of the rotary pin (52).

7. Rapid-change adapter according to claim 6, **characterised in that** the centre point M_{E} is arranged so as to be offset with respect to the centre point M_{D} in such a manner that the first end portion (80) of the cylindrical outer face of the eccentric portion (53) is arranged so as to be offset in an inward direction with respect to the outer face of the rotary pin (52) by a larger amount than the second end portion (82) of the cylindrical outer face of the eccentric portion (53).

8. Rapid-change adapter according to any one of claims 1 to 7, **characterised in that** the clamping element is arranged so as to be able to be displaced in the longitudinal direction.

9. Rapid-change adapter according to any one of claims 1 to 8, **characterised in that** the eccentric lever (51) in the pretensioned state partially protrudes with the rotary pin (52) into the first hole (30).

10. Rapid-change adapter according to any one of claims 1 to 9, **characterised in that** there is provided a release rotation prevention means (60) which engages on the clamping element (50).

11. Rapid-change adapter according to any one of claims 2 to 10, **characterised in that** the rotary pin (52) has in the region of the release rotation prevention means (60) a surface which is provided with grooves (55).

12. Rapid-change adapter according to any one of claims 1 to 11, **characterised in that** the release rotation prevention means (60) comprises a resilient pressure piece (61).

13. Rapid-change adapter according to claim 12, **characterised in that** the pressure piece (61) is arranged perpendicularly relative to the rotation axis (59) of the rotary pin (52).

14. Rapid-change adapter according to any one of claims 10 to 13, **characterised in that** the rotary pin (52) has a stop (72) in the region of the release rotation prevention means (60).

15. Rapid-change adapter according to any one of claims 1 to 14, having an spraying device (1) which has a support face (4),
there being arranged on the support face (4) at least one retention element (5) which protrudes with respect to the support face (4) and which has in the outer face thereof a semi-circular recess (6), in which, in the assembled state, the eccentric lever (51) of the rapid-change adapter (20) engages.

## Revendications

1. Adaptateur de changement rapide (20) pour appareils de pulvérisation (1), avec un corps de base (21) qui présente une surface de montage (26) pour la mise en place d'un appareil de pulvérisation (1) et au moins un élément de serrage rotatif (50), sachant qu'au moins un premier perçage (30) destiné à recevoir au moins un élément de maintien (5) fixé à l'appareil de pulvérisation (1) est prévu dans le corps de base (1) perpendiculairement à la surface de montage (26) et que l'élément de serrage (50) s'étend au moins en partie dans le premier perçage (30), l'axe de rotation (59) de l'élément de serrage (50) étant disposé parallèlement à la surface de montage (26), sachant que l'élément de serrage (50) est un levier excentrique (51), qui est monté à rotation dans un deuxième perçage (40) qui est disposé dans le corps de base (21) perpendiculairement au premier perçage (30) et en décalage par rapport à celui-ci, **caractérisé en ce que** le levier excentrique (51) est précontraint en direction de l'axe de rotation (59) au moyen d'un ressort (57).

2. Adaptateur de changement rapide selon la revendication 1, **caractérisé en ce que** le levier excentrique (51) présente un pivot (52) et une partie excentrique (53).

3. Adaptateur de changement rapide selon la revendication 1 ou 2, **caractérisé en ce que** la partie excentrique (53) présente une partie cylindrique ou en forme de cylindre partiel.

4. Adaptateur de changement rapide selon l'une des revendications 1 à 3, **caractérisé en ce que** le levier excentrique (51) présente un évidement (54) dans la région de la partie excentrique (53).

5. Adaptateur de changement rapide selon l'une des revendications 1 à 4, **caractérisé en ce que** la partie excentrique (53) présente une surface extérieure ayant un rayon de courbure R_{E} qui est inférieur au rayon de courbure R_{D} de la surface extérieure cylindrique du pivot (52).

6. Adaptateur de changement rapide selon la revendication 5, **caractérisé en ce que** le centre M_{E} du rayon de courbure R_{E} de la partie excentrique (53) est disposé en décalage par rapport au centre M_{D} du rayon de courbure R_{D} du pivot (52).

7. Adaptateur de changement rapide selon la revendication 6, **caractérisé en ce que** le centre M_{E} est disposé en décalage par rapport au centre M_{D} de telle sorte que la première partie terminale (80) de la surface extérieure cylindrique de la partie excentrique (53) est disposé en décalage vers l'intérieur, par rapport à la surface extérieure du pivot (52), d'un plus grand montant que la deuxième partie terminale (82) de la surface extérieure cylindrique de la partie excentrique (53).

8. Adaptateur de changement rapide selon l'une des revendications 1 à 7, **caractérisé en ce que** l'élément de serrage est disposé à translation en direction longitudinale.

9. Adaptateur de changement rapide selon l'une des revendications 1 à 8, **caractérisé en ce que** le levier excentrique (51), dans l'état précontraint, s'enfonce partiellement dans le premier perçage (30) par le pivot (52).

10. Adaptateur de changement rapide selon l'une des revendications 1 à 9, **caractérisé en ce qu'**il est prévu un dispositif anti-desserrage (60) qui agit sur l'élément de serrage (50).

11. Adaptateur de changement rapide selon l'une des revendications 2 à 10, **caractérisé en ce que** le pivot (52) présente, dans la région du dispositif anti-desserrage (60), une surface pourvue de gorges (55).

12. Adaptateur de changement rapide selon l'une des revendications 1 à 11, **caractérisé en ce que** le dispositif anti-desserrage (60) comprend un élément de pression (61) à effet de ressort.

13. Adaptateur de changement rapide selon la revendication 12, **caractérisé en ce que** l'élément de pression (61) est disposé perpendiculairement à l'axe de rotation (59) du pivot (52).

14. Adaptateur de changement rapide selon l'une des revendications 10 à 13, **caractérisé en ce que** le pivot (52) présente une butée (72) dans la région du dispositif anti-desserrage (60).

15. Adaptateur de changement rapide selon l'une des revendications 1 à 14 avec un appareil de pulvérisation (1) qui présente une surface d'appui (4),
sachant qu'au moins un élément de maintien (5) dépassant par rapport à la surface d'appui (4) est disposé sur la surface d'appui (4), élément qui présente dans sa surface extérieure un évidement semi-circulaire (6) dans lequel s'engage, dans l'état monté le levier excentrique (51) de l'adaptateur de changement rapide (20).
